# EUROPEAN PATENT APPLICATION

(11) **EP 3 614 279 A1**
(43) Date of publication of application: **26.02.2020**
(21) Application number: 18190037.4
(22) Date of filing: 21.08.2018
(51) Int. Cl.: G06F 17/22, G06F 17/21

(54) **A METHOD AND A DEVICE FOR DISPLAYING TEXT WITH A PROPORTIONAL FONT**

(71) Applicant: Advanced Digital Broadcast S.A., 1262 Eysins (CH)
(72) Inventor: Powchowicz, Tomasz, 65-119 Zielona Gora (PL)
(74) Representative: Kancelaria Eupatent.pl Sp. z.o.o

(57) **Abstract**

A computer-implemented method for displaying a source text with a proportional font, the method comprising: determining (301, 402) within the source text at least one token, wherein the token comprises one or more characters and wherein the tokens within the source text are separated by one or more separator characters; determining (302, 401) a width Wm for monospaced areas (n) to form a monospaced matrix (500); determining (301, 404) starting indices (nᵢ) of the at least one token within the monospaced matrix (500); determining (303, 405) a starting position of the at least one token within the monospaced matrix (500) as a product of the starting index (nᵢ) of the token and the width (Wm) of the monospaced area (n); and rendering (304, 406) the at least one token at its determined starting position (Xᵢ) on screen using the proportional font.

## Description

### TECHNICAL FIELD

The present disclosure relates to a method and a device for displaying text with a proportional font.

### BACKGROUND

A monospaced font is a font in which every letter or character occupies the same amount of horizontal space. The monospaced fonts are commonly used by computer programmers and are employed in the majority of integrated development environments (for example IDEs for programming languages such as C/C++, PHP, Java, Haskell) and software text editors as a default typeface, in order to increase the readability of a source code. The monospaced fonts are also widely used for displaying logged information and for printing diagnostic screens. The monospaced fonts provide a vertical alignment between consecutive lines of the text, which allows to visualize various elements, such as tables or schemes, formed by means of the font characters.

In contrast, proportional fonts, wherein each character and spacing can have a different width, need more sophisticated methods for text alignment by using special formatting techniques (for example, using HyperText Markup Language - HTML).

Therefore, in the case when monospaced fonts are not available and introducing a formatting language is hard to accept, methods for converting a proportional font to a monospaced font have to be used.

Basic emulation of monospaced characters can be implemented by converting the proportional font to a monospaced font. The result of the switching operation has a few drawbacks. The first is a loss of author's intention because the text is not formatted in a way as intended by the author. The second reason is a loss of comprehension during reading because some of the elements do not match in the vertical axis (e.g. text alignment or composing tables). On the other hand, if characters are precisely rendered at fixed positions, reading comprehension is undermined by scattered letters. They do not form visual groups because of too much space between them. Additionally, the printed text is much longer when compared to a similar text rendered with the monospaced or proportional font. Accordingly, the whole text occupies more space on a display device.

Therefore, there is a need to provide an alternative method for displaying text, which is a compromise between readability and a monospaced positioning.

### SUMMARY

There is disclosed herein a computer-implemented method for displaying a source text with a proportional font, the method comprising: determining within the source text at least one token, wherein the token comprises one or more characters and wherein the tokens within the source text are separated by one or more separator characters; determining a width Wm for monospaced areas (n) to form a monospaced matrix; determining starting indices (nᵢ) of the at least one token within the monospaced matrix; determining a starting position of the at least one token within the monospaced matrix as a product of the starting index (nᵢ) of the token and the width (Wm) of the monospaced area (n); and rendering the at least one token at its determined starting position (Xᵢ) on screen using the proportional font.

The width (Wm) of the monospaced area (n) may be calculated as an average width of all characters of the proportional font.

The width (Wm) of the monospaced area (n) may be defined as a minimum value that ensures non-overlapping for all characters of the proportional font.

The method may comprise dividing the source text into a plurality of tokens and determining the starting indices (nᵢ) for all of the plurality of the tokens before determining the starting positions for the plurality of the tokens.

The method may comprise searching the source text to find a token and next determining the starting index (nᵢ) and determining the starting position for the found token, and repeating these steps for consecutive tokens within the source text.

The method may comprise rendering the found token at its determined starting position (Xᵢ) before searching for the consecutive token.

The method may comprise rendering all the tokens after determining starting positions (Xᵢ) for all the tokens.

The separator character may be a space or another character that does not form a visual entity.

There is also disclosed a computer program comprising program code means for performing all the steps of the computer-implemented method as described herein when said program is run on a computer, as well as a computer readable medium storing computer-executable instructions performing all the steps of the computer-implemented method as described herein when executed on a computer.

There is also disclosed a rendering device comprising modules configured to perform all the steps of the method as described herein.

### BRIEF DESCRIPTION OF DRAWINGS

The method presented herein is presented by means of example embodiments on a drawing, wherein:
Fig. 1 presents a structure of a system for performing the presented method;
Fig. 2 presents a comparison between the prior art use of font conversion methods and the presented method for displaying text;
Fig. 3 presents steps of one embodiment of a method for displaying text to resemble a monospaced font;
Fig. 4 presents a flowchart of another embodiment of a method for displaying text to resemble a monospaced font;
Fig. 5 presents an exemplary monospaced text rendered according to the presented method.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually, these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### DETAILED DESCRIPTION

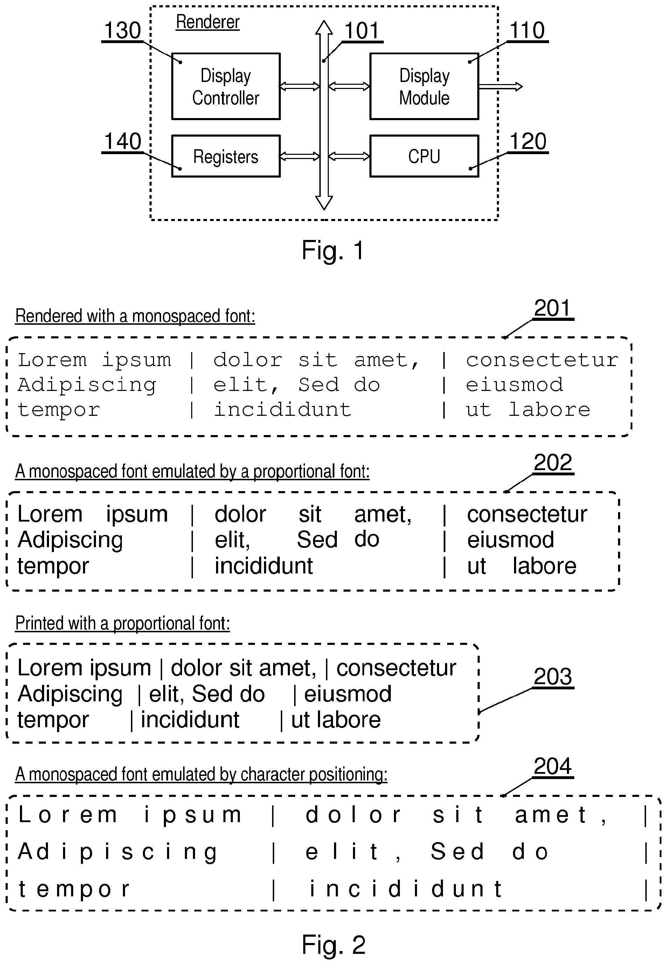

Fig. 1 presents a structure of a rendering device for performing a method for displaying text to resemble a monospaced font. The device (renderer) comprises a registers module 140 for storing calculated positions nᵢ of tokens within a display matrix needed for displaying tokens on a display device, a display module 110 responsible for generating data to be presented, a display controller 130 responsible for operating the display device, and a CPU unit 120 for processing system data. All modules of the renderer communicate with each other via one or more internal data buses 101.

Fig. 2 presents a comparison between the prior art use of monospaced font conversion methods and the presented method for displaying text. A first table 201 presents a text rendered with the monospace font, in which each letter and/or character occupies the same amount of horizontal space. A second table 202 presents the monospaced font emulated by a proportional font, according to the method presented herein, wherein for each readable token (a word, a word and characters combined, compound words) its position is calculated. A third table 203 presents a text rendered with a proportional font in which each character may occupy different amount of horizontal space which causes that the vertical alignment, between consecutive lines of the text, is disturbed. A fourth table 204 presents the text rendered by a known method with the monospaced font which is emulated by a character positioning, wherein a position for each character is calculated. As a result the emulated monospaced text of the fourth table 204 is significantly wider (occupies more horizontal space).

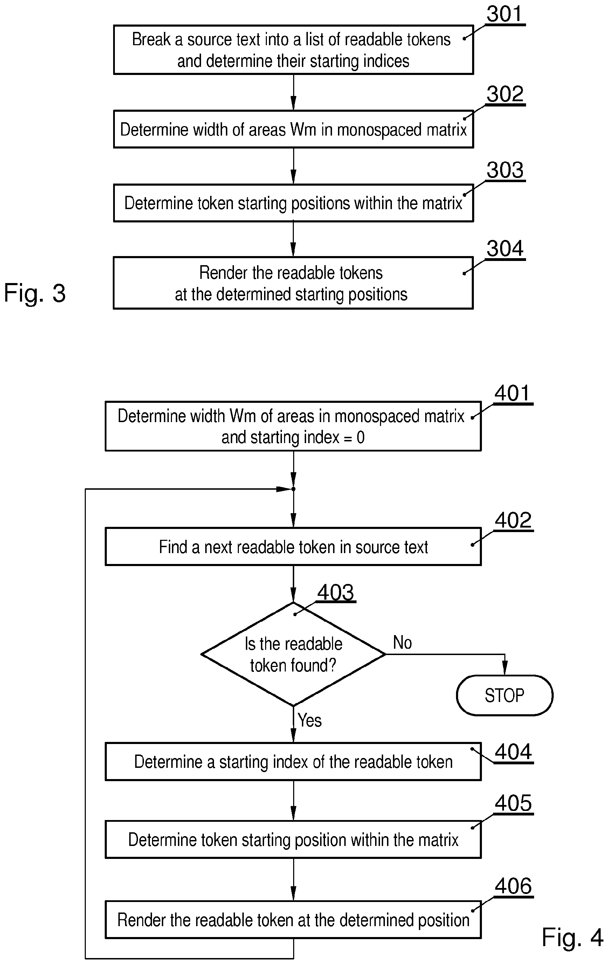

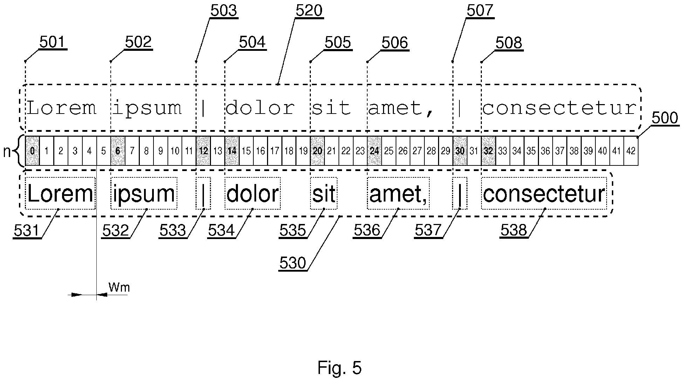

Fig. 3 presents steps of one embodiment of a method for determining positions for displaying text to resemble a monospaced font. The embodiment of Fig. 3 operates in a streaming manner, i.e. it comprises the main steps of pre-rendering and rendering. Therefore, it allows to group certain operations which is especially important in case of software with a layered structure. First, in step 301, a text is divided into a list of readable tokens, wherein the token is a list composed of characters (letters, numbers or special characters) constituting a visual entity. For each token, the index defining its starting position in the monospaced matrix is defined. In general, a token comprises a single word. In particular cases, special tokens can be used comprising a single character, in particular a special character (such as "/" or "-" or "|") that forms an element of a visual element of the displayed text (such as a line of a table). Therefore, the tokens may form a word, a word and characters combined or compound words. The tokens are intended to be "readable", i.e. they may represent a single entity that the user is intended to read as a whole. The tokens are separated by spaces and/or other characters that do not form a visual entity. Next, in step 302, the width Wm of monospaced areas of the monospaced matrix 500 is defined, as explained below. Alternatively, the actions of step 302 may be performed first, and of step 301 next. Next, for each token, a starting position is determined in step 303 within the monospaced matrix 500, as the product of the token starting index and the matrix width Wm. For example, as shown in Fig. 5, the starting position for the token Ipsum (having the index equal to 6) will be 6*Wm. Finally, in step 304, the readable tokens are rendered (printed) on a display device in their calculated positions.

Fig. 4 presents a flowchart of another embodiment for a method for determining positions for displaying text to resemble a monospaced font. The embodiment of fig. 4 operates in an incremental manner (token by token), i.e. for each token first a pre-rendering process is performed and next the rendering process for this particular token is performed. First, in step 401, the width Wm of monospaced areas of a monospaced matrix 500 is defined, as explained below and the starting index is defined as equal to zero. Next, in step 402, a next readable token is searched for within the source text. Next, in step 403, it is checked if the readable token is found. If not, the process terminates, otherwise it continues to step 404 in which a starting index of the readable token is determined, as the sum of the previous starting index and the number of characters of the preceding token incremented by the number of separator characters between the tokens (such as one or more spaces or other special characters (that do not form a visual entity) defined as separators). Next, in step 405 the starting position of that token is determined within the monospaced matrix 500, as the product of the starting index and the matrix width Wm. Next, in step 406, the readable token is rendered at the determined position and the process loops back to the first step to find a next token.

In yet another alternative embodiment, the process may loop back to the first step after completion of step 405, and execute step 406 for all tokens once no other tokens are found in step 403.

The algorithm from Fig. 3 may processes data in parallel. It needs more memory (registers modules) than the algorithm from Fig. 4, which processes data without storing intermediate step results.

The algorithm of rendering is performed for each line of the rendered text, wherein the number of characters that may fit in a single line of the rendered text equals the width of the screen that is available for display of the rendered text divided by the width Wm of the monospaced areas.

Fig. 5 presents an example of the displayed text 530 according to the presented method. The positions of the readable tokens 520 in the source text are defined for a position of a first character 501-508 of each token. In other words, a readable token index is defined as an index of the first character 501-508 in the readable token 520.

A monospaced matrix 500 is defined that determines the positions of the characters on screen. The matrix 500 comprises a plurality of monospaced areas, each of which can be numbered with an index n. The position of each token in the matrix is defined by the index n of the monospaced area of the matrix at which that word shall be positioned. In the example of Fig. 5, the tokens will have defined starting indices at monospaced areas 0 (Lorem), 6 (ipsum), 12 (|), 14 (dolor), 20 (sit), 24 (amet), 30 (I), 32 (Consectetur). The width of each area corresponds to the width of the character of the monospaced font that is to be emulated. The width can be specified in pixels of the screen or any other suitable unit.

The position Xᵢ of the readable token i on screen is determined by a formula X=nᵢ*Wm, where Wm is a width of a monospaced font character and nᵢ is the starting index of the token i within the matrix. The monospaced width Wm may be calculated for example as an average width of all characters of the proportional font, or by analyzing the minimum non-overlapping width for all readable tokens, or experimentally by using a width of a character (for example "1"). The value of Wm determines a distance between the tokens and shall be selected optimally depending on the fonts used (if the value of Wm is too low, the tokens (words) may overlap each other, if it is too high the distances between tokens will be too large and therefore will make the reading of the text difficult). The positions Xᵢ of tokens 531-538 in the displayed text 530 correspond to the indexed positions of the first characters 501-508 of the source text tokens 520, while the tokens 531-538 itself, in the displayed text, are rendered by means of the proportional font. As a result, each token (word) comprises characters, having different width and owing to this they are easily readable by users, while simultaneously, the vertical alignment of the tokens between the lines of the text is maintained (it corresponds to the original formatting of the text).

The presented method for displaying text with a proportional font offers smaller memory usage compared to known font conversion methods, which allows reducing memory size in legacy platforms, legacy devices and consequently to reduce their price. By implementing the presented method for displaying text it is possible to limit licensing costs for monospaced characters.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for displaying text with a proportional font may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A computer-implemented method for displaying a source text with a proportional font, the method comprising:
- determining (301, 402) within the source text at least one token, wherein the token comprises one or more characters and wherein the tokens within the source text are separated by one or more separator characters;
- determining (302, 401) a width Wm for monospaced areas (n) to form a monospaced matrix (500);
- determining (301, 404) starting indices (nᵢ) of the at least one token within the monospaced matrix (500);
- determining (303, 405) a starting position of the at least one token within the monospaced matrix (500) as a product of the starting index (nᵢ) of the token and the width (Wm) of the monospaced area (n); and
- rendering (304, 406) the at least one token at its determined starting position (Xᵢ) on screen using the proportional font.

2. The method according to claim 1 wherein the width (Wm) of the monospaced area (n) is calculated as an average width of all characters of the proportional font.

3. The method according to claim 1 wherein the width (Wm) of the monospaced area (n) is defined as a minimum value that ensures non-overlapping for all characters of the proportional font.

4. The method according to any of claims 1-3, comprising dividing (301) the source text into a plurality of tokens and determining the starting indices (nᵢ) for all of the plurality of the tokens before determining the starting positions (303) for the plurality of the tokens.

5. The method according to any of claims 1-3, comprising searching (402) the source text to find a token and next determining (404) the starting index (nᵢ) and determining (405) the starting position for the found token, and repeating these steps (402, 404, 405) for consecutive tokens within the source text.

6. The method according to claim 5, comprising rendering (406) the found token at its determined starting position (Xᵢ) before searching (402) for the consecutive token.

7. The method according to any of claims 1-5, comprising rendering (304, 406) all the tokens after determining starting positions (Xᵢ) for all the tokens.

8. The method according to any of the preceding claims, wherein the separator character is a space or another character that does not form a visual entity.

9. A computer program comprising program code means for performing all the steps of the computer-implemented method according to any of claims 1-8 when said program is run on a computer.

10. A computer readable medium storing computer-executable instructions performing all the steps of the computer-implemented method according to any of claims 1-8 when executed on a computer.

11. A rendering device comprising modules (110-140) configured to perform all the steps of the method of any of claims 1-8.
